# EUROPEAN PATENT APPLICATION

(11) **EP 1 418 331 A2**
(43) Date of publication of application: **12.05.2004**
(21) Application number: 03256548.3
(22) Date of filing: 17.10.2003
(51) Int. Cl.: F02K 1/34

(54) **Suppression of part of the noise from a gas turbine engine**

(30) Priority: 09.11.2002 GB 0226228
(71) Applicant: ROLLS-ROYCE plc, London, SW1E 6AT (GB)
(72) Inventor: Webster, John Richard, Derby, DE23 6AF (GB); Strange, Paul Jonathan Railton, Duffield Derby, DE56 4DS (GB)
(74) Representative: Gunn, Michael Alan

(57) **Abstract**

A method and a system (10) for exhausting gas via a nozzle (19, 21) of a gas turbine engine, for example. The system (10) comprises a nozzle (19, 21) comprising a nozzle body portion (32, 33, 74) defining a nozzle exit (42, 43), characterised in that the nozzle body portion (32, 33, 74) comprises fluid injection means (60), positioned upstream of the exit (42, 43) relative to a fluid flow (F1, F2) created by the operation of the system, for injecting fluid (68) upstream of the exit (42, 43).

## Description

Embodiments of the present invention relate to the suppression of part of the noise arising from the fluid flow output by a gas turbine engine. They particularly relate to the suppression of those parts of the noise which are audible to humans.

In gas turbine engines the fluid flow exhausted by the turbines via the core nozzle mixes turbulently with adjacent fluid flows or the ambient fluid and produces noise which is perceptible to humans. This is a problem in jet engines for air-craft, particularly for aeroplanes during take-off.

The use of a bypass nozzle fed by a core bypass reduces the mean velocity of the engine's exhaust products and reduces the noise of the engine. This is, however, a partial solution. There are limits to the size of the bypass because as the bypass size is increased, although the mean velocity continues to drop, the engine size and drag increases.

A current additional solution to the problem of noise is to use forced mixers at the exit of the hot nozzle. A disadvantage of this is that it requires the bypass to extend beyond the exhaust of the core nozzle, which increases the weight of the engine.

Another current solution is to use tabs/serrations in either the core nozzle or the bypass nozzle to force the exhausted fluids to mix more rapidly. However, although this reduces noise when it is required, such as during take-off, it has a permanent performance penalty because the tabs/serrations decrease the efficiency of the engine.

US2990905 (Lilley) discloses an apparatus for suppressing part of the noise created in jet engines. The core nozzle ending comprises co-axial inner and outer walls separated by an annular duct. The annular duct is connected to a helium supply or an air supply tapped from the core and has a series of nozzles in the downstream wall of the annular duct. These nozzles emit auxiliary jets which penetrate an outer envelope of the main jet. The auxiliary jets set the pattern of the turbulence in the main jet and are in some ways analogous to the effect of teeth or corrugations in the main jet flow. A problem with this solution is that the flat end to the core nozzle created by the annular duct is not aerodynamically efficient and produces drag. There is therefore a permanent performance penalty in comparison to a tapered core nozzle ending which terminates at a knife-edge.

"High Speed Jet Noise Reduction Using Microjets" by Krothapalli et al, 8th American Institute of Aeronautics and Astronautics (AIAA) Aeroacoustics Conference, 17-19^{th} June 2002, Colorado (AiAA 2002-2450) and "Turbulence Suppression in the Noise Producing Region of a M=0.9 Jet" by Arakeri et al, AIAA 2002-2523, both describe an experimental system in which high-pressure microjets are injected into the primary jet at a nozzle exit so that they impinge on the shear layer downstream of the nozzle exit. An experimental apparatus is described in which the microjet supply is housed separately to the nozzle. This is impractical and inefficient in a working gas turbine engine.

Therefore, in the currently proposed solutions for further suppressing part of the noise produced by a gas turbine engine fuel efficiency is traded for noise suppression.

It would be desirable to provide a gas turbine engine which suppresses part of the noise produced by the engine but without a significant, permanent performance penalty.

According to one aspect of an embodiment of the present invention there is provided a gas turbine engine (10), comprising: a nozzle (19, 21) comprising a nozzle body portion (32, 33, 74) defining a nozzle exit (42, 43), characterised in that the nozzle body portion (32, 33, 74) comprises fluid injection means (62), positioned upstream of the exit (42, 43) relative to a fluid flow (F1, F2) created by the operation of the engine, for injecting fluid (68) upstream of the exit (42, 43).

According to another aspect of an embodiment of the present invention there is provided a method of suppressing part of the noise of a gas turbine engine comprising a nozzle (19, 21), the nozzle (19, 21) comprising a nozzle body portion (32, 33, 74) defining a nozzle exit (42, 43), the method comprising the step of: injecting fluid (68) into a fluid flow (F1) created by the operation of the engine (10) while the fluid flow (F1) is travelling adjacent the nozzle body portion (32, 33, 74).

The injection of fluid upstream of the nozzle exit obviates the need to enlarge or reshape the nozzle to obtain noise suppression and avoids any significant reduction in engine efficiency.

According to one aspect of another embodiment of the present invention, there is provided a gas turbine engine (10), comprising: a nozzle (19, 21) comprising a nozzle body portion (32, 33, 74) defining a nozzle exit (42, 43), characterised in that the nozzle body portion (32, 33, 74) comprises output means (62), positioned upstream of the exit (42, 43) relative to a fluid flow (F1) created by the operation of the engine (10), for disturbing a boundary layer (75) between the nozzle body portion (32, 33, 74) and the fluid flow (F1).

According to another aspect of this embodiment there is provided a method of suppressing part of the noise of a gas turbine engine comprising a nozzle (19, 21), the nozzle (19, 21) comprising a nozzle body portion (32, 33) defining a nozzle exit (42, 43), the method comprising the step of: disturbing a boundary layer between the nozzle body portion and a fluid flow created by the operation of the engine.

The boundary layer is disturbed as opposed to disturbing the shear layer using air jets or tabs/serrations, as in the prior art. A smaller amount of energy is required to manipulate the boundary layer compared to the shear layer, and achieve comparable suppression of noise.

According to another aspect of an embodiment of the invention there is provided a jet engine (10) for an aeroplane, comprising: a nozzle (19, 21), the nozzle comprising a nozzle body portion (32, 33) comprising fluid injection means for injecting fluid characterised in that the jet engine further comprises control means for controlling the fluid injection means to inject fluid during a first phase of operation and to not inject fluid during a second phase of operation.

Thus any performance penalty which might be associated with the fluid injection can be avoided when noise suppression is no longer required.

For a better understanding of the invention reference will now be made by way of example only to the accompanying drawings, illustrating embodiments of the invention, in which:
Fig 1 schematically illustrates a sectional view of the upper half of a gas turbine engine;
Fig 2 illustrates a nozzle body;
Fig 3a illustrates a air supply control mechanism;
Fig 3b illustrates an alternative air supply control mechanism; and
Fig 4 an end view into a nozzle.

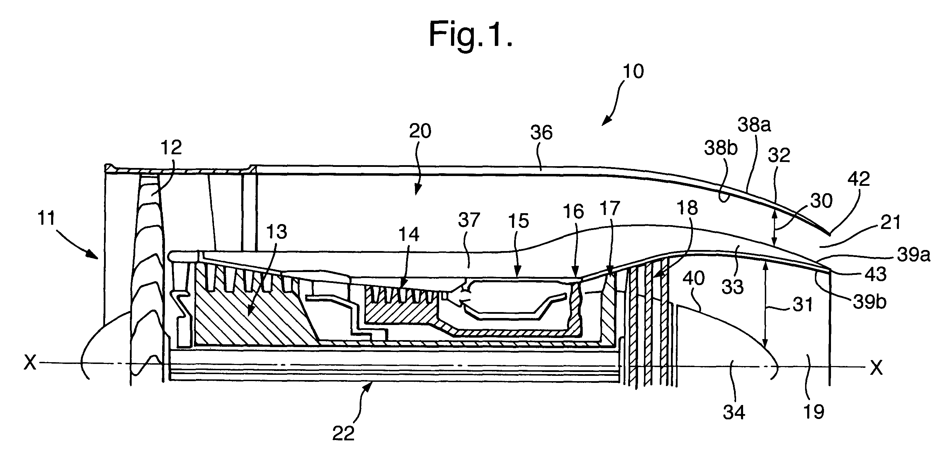

Fig. 1 illustrates a sectional side view of the upper half of a gas turbine engine 10. The gas turbine engine comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18 and a core nozzle 19. The compressors 13, 14, 15, the combustor 15 and the turbine arrangement form the core of the engine. The gas turbine engine 10 has core bypass 20 connected between the propulsive fan 12 and a bypass nozzle 21, inscribing the hot exhaust nozzle 19.

The gas turbine engine 10 operates in a conventional manner so that air entering in the intake 11 is accelerated by the propulsive fan 12 which produces two air flows: a first air flow into the core and a second air flow into the by-pass 20 which provides propulsive thrust. The intermediate pressure compressor 13 compresses the air flow directed into it for delivery to the high pressure compressor 14 where further compression takes place. The compressed air from the high pressure compressor 14 is directed into the combustor 15 where it is mixed with fuel and the mixture combusted. The resultant hot combustion products then expand and thereby drive the high, intermediate and low pressure turbines 16, 17, 18 before being exhausted through the core nozzle 19 to provide additional propulsive thrust. The high, intermediate and low pressure turbines 16, 17, 18 respectively drive the high and intermediate pressure compressors 14, 13 and the propulsive fan 12 by suitable interconnecting shafts 22. The direction of fluid flow in the figure is therefore from left to right.

The bypass nozzle 21 is annular and defines a bypass nozzle flow channel 30. The bypass nozzle flow channel 30 is bounded on its outside edge by an interior surface 38b of a bypass nozzle body portion 32 and on its inside edge by an exterior surface 39a of a core nozzle body portion 33. In other embodiments by bypass nozzle 21 may be circular.

The core nozzle 19 is annular and defines a core nozzle flow channel 31. The core nozzle flow channel 31 is bounded on its outside edge by an interior surface 39b of the core nozzle body potion 33 and on its inside edge by an exterior surface 40 of a plug 34. In other embodiments, the core nozzle may be circular.

The bypass nozzle body portion 32 is part of an outer body portion 36 of the gas turbine engine 10. It has an exterior surface 38a and an interior surface 38b that converge to meet at an acute angle at the exit 42 of the bypass nozzle 21. The bypass nozzle body portion 32 therefore tapers at its ending to an edge at the exit 42 of the bypass nozzle 21.

The core nozzle body portion 33 is part of an inner body portion 37 of the gas turbine engine 10. It has an exterior surface 39a and an interior surface 39b that converge to meet at an acute angle at the exit 43 of the core nozzle 19. The core nozzle body portion 33 therefore tapers at its ending to an edge at the exit 43 of the core nozzle 43.

The inner body portion 36 and the outer body portion 37 in combination define at least a portion of the bypass 20.

Embodiments of the invention cause an aerodynamic disturbance upstream of a nozzle exit in order to enhance mixing and hence reduce noise. The aerodynamic disturbance is preferably formed adjacent a nozzle body portion. For example it may be created at one or more locations adjacent any one or more of the exterior surface 38a of the bypass nozzle body 32, the interior surface 38b of the bypass nozzle body 32, the exterior surface 39a of the core nozzle body 33 and the interior surface 39b of the core nozzle body 33. The aerodynamic disturbance is created by outputting energy into a fluid stream using for example sound wave production means or, preferably, fluid injection means.

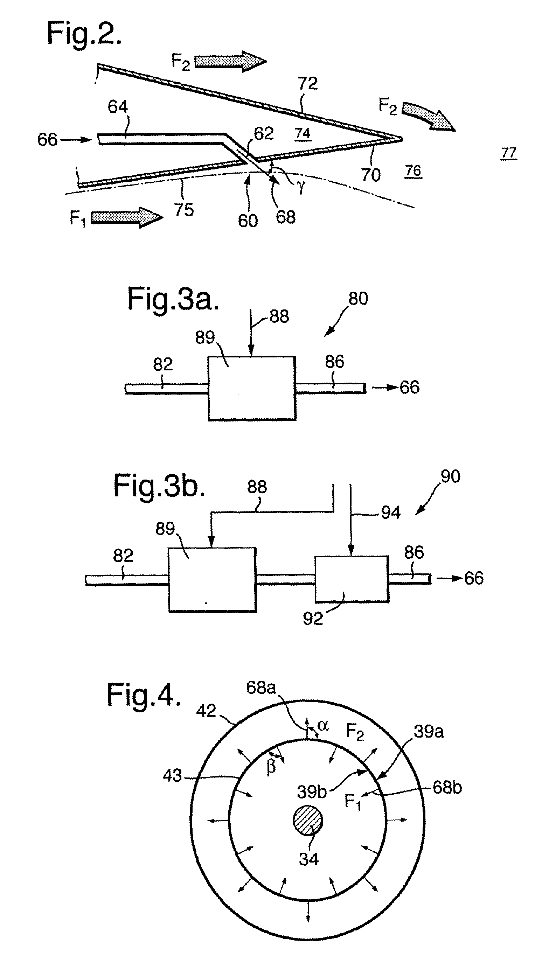

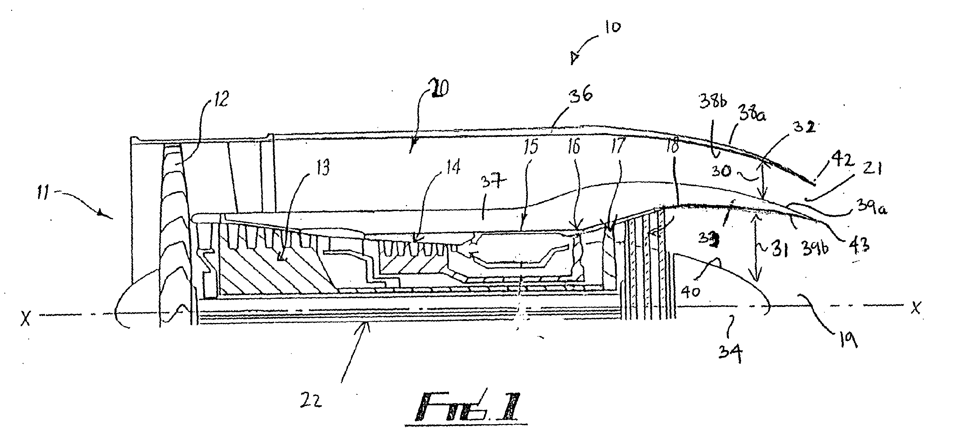

Figure 2 illustrates a nozzle body 74. The nozzle body 74 has a first surface 70 which may be the upper surface or lower surface of the core nozzle body or the upper surface or the lower surface of the bypass nozzle body. The nozzle body 74 has a second surface 72 which would be respectively the lower or upper surface of the core nozzle body or the lower or upper surface of the bypass nozzle body. A first fluid flow F1 flows over first surface 70 of the nozzle body 74. A second fluid flow flows over the second surface 72.

If the nozzle body 74 is the bypass nozzle body, then one of the fluid flows F1, F2 is produced by the fluid exhausted from the bypass and the other is produced, for example, by the propulsion of the nozzle body through the atmosphere as part of an aeroplane engine and has a lower speed. If the nozzle body 74 is a core nozzle body, then one of the fluid flows F1, F2 is produced by the fluid exhausted from the core and the other is produced by the fluid exhausted by the bypass.

The nozzle body 74 has fluid injection means 60 comprising an aperture 62 in the first surface 70 of the nozzle body 74. The aperture 60 is connected via a feed 64 to a supply of air 66. The air supplied exits the aperture 62 as a air jet 68, which forms an acute angle γ with the first surface 70 of the nozzle. The air jet will preferably have an axial component of velocity in the direction of the fluid flow F1 and a radial component of velocity into the fluid flow F1, but it may also have a tangential component of velocity (into or out of the page of the figure). The air jet 68 is preferably directed downstream, that is in the direction of the fluid flow F1, and enters the fluid flow F1 adjacent the aperture 62. The fluid flow F1 has a boundary layer 75 of static or very slow moving air adjacent the first surface 70 upstream of the aperture 62. The air jet 68 disturbs the boundary layer 75 at the aperture 62 and downstream of the aperture 62. The boundary layer 75 grows creating a low speed turbulent region 76 adjacent the first surface 70 downstream of the aperture which increases in size as it progresses down stream to the nozzle exit. The low speed turbulent region 76 causes the fluid flow F2 to turn into the fluid flow F1 and increases the rate of mixing of the fluid flows F1 and F2 in the shear layer 77. In some embodiments it may be possible to use the air jet 68 to detach the boundary layer 75.

Although one aperture is illustrated in Figure 2, a nozzle body may have a plurality of apertures on one of its surfaces. Each aperture may produce an air jet 68 which is at the same angle and direction (axial, radial and tangential components) or each may have a different angle and direction. There may be apertures in one, all or any combination of the exterior surface 38a of the bypass nozzle body 32, the interior surface 38b of the bypass nozzle body 32, the exterior surface 39a of the core nozzle body 33 and the interior surface 39b of the core nozzle body 33.

The apertures used may be particularly small e.g. less than a few mms, in which case the air jets 68 are called microjets. The mass flow through the apertures may be around 1% of the core air flow. The use of microjets, and in particular, pulsed microjets allows a lower mass flow to be used in the air jet 68 to achieve the desired boundary layer disturbance. Pulsed microjets are particularly useful for achieving boundary layer separation.

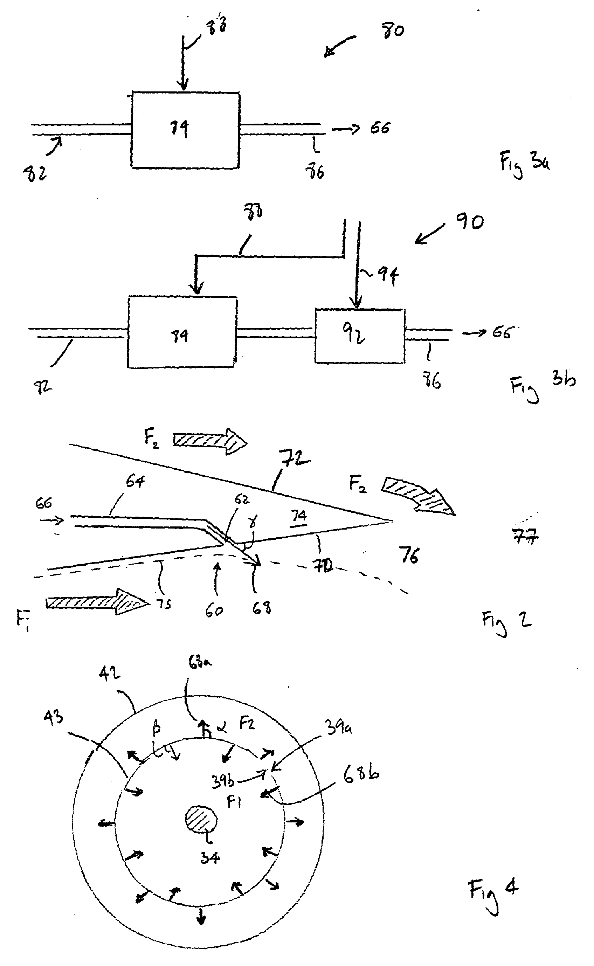

Figure 3a illustrates an air supply control mechanism 80 comprising a tap 82 from one of the compressors of the core which supplies pressurised air, a switchable valve mechanism 84 and an output 86 for providing the air supply 66. An input control signal 88 is used to control the switchable valve mechanism 84 between an open position in which the tap 82 is connected to the output 86 and a closed position in which the connection between tap 82 and output 86 is closed. The output 86 may connect directly to an air jet feed 64 or via a manifold to a plurality of air jet feeds. In other embodiments, the switchable valve is arranged to control the mass flow of air in an air jet 68 as well as switching the air jet 68 on and off.

Figure 3b illustrates a microjet air supply mechanism 90 comprising a tap 82 from one of the compressors of the core, a switchable valve mechanism 84 connected to the tap 82, a pulsing mechanism 92 connected to the switchable valve mechanism 84 and an output 86 connected to the pulsing mechanism 92, for providing the air supply 66. An input control signal 88 is used to control the switchable valve mechanism 84 between an open position in which the tap 82 is connected to the pulsing mechanism 92 and a closed position in which the connection between tap 82 and pulsing mechanism 92 is closed. In other embodiments, the switchable valve mechanism 84 is arranged to control the mass flow of air in an air jet 68 (i.e. its amplitude) in response to the input control signal 88 as well as switching the air jet 68 on and off. The pulsing mechanism 92 receives a second input control signal 94 that controls the frequency at which the air supply 66 is pulsed. In an alternative embodiment, the pulsing frequency is fixed and the pulsing mechanism 92 may be a simple pneumatic or mechanical oscillator which is activated when it receives an air flow (e.g. a whistle or horn). The frequency of the oscillator is preferably tuned to the natural length of the boundary layer which is of the order of kHz. The output 86 of the pulsing mechanism 92 may connect directly to an air jet feed 64 or via a manifold to a plurality of air jet feeds. The output of the switchable valve mechanism 84 may connect only to a single pulsing mechanism 92 or via a manifold to a plurality of pulsing mechanisms 92, each pulsing mechanism 92 being capable of providing one or more pulsed air jets.

Referring to Figures 3a and 3b, the switchable valve mechanism 84 may be used to turn the air jets on and off. This may occur regularly with a frequency of Hz in order to obtain a desired disruption of the boundary layer 80. When the gas turbine engine is used as a jet engine for a aeroplane the switchable valve mechanism can be used to switch on the air jets and reduce noise at take-off when the aeroplane engine is particularly noisy and close to the ground. The mechanism can then be used to switch off the air jets when the aeroplane is cruising at altitude. Thus the air jets can be used to suppress part of the jet engine noise at take-off and can be switched off when noise suppression is no longer required to achieve maximum fuel efficiency.

Figure 4 illustrates an end view into a nozzle of a gas turbine engine 10. The edge 42 of the bypass nozzle body 32 , the edge 43 of the core nozzle body 33 and the plug 34 are illustrated. Also illustrated are a series of air jets 68a injected from the exterior surface 39a of the core nozzle body 33 into the fluid flow F2 and a series of air jets 68b injected from the interior surface 39b of the core nozzle body 33 into the fluid flow F1. The series of air jets 68a are injected at an angle α relative to the tangent to the exterior surface 39a. In this example all the air jets 68a are injected at the same angle which is approximately 90 degrees i.e. with no tangential component, but in other embodiments the angle α of the air jets may be different for each air jet 68a. The series of air jets 68b are injected at an angle β relative to the tangent to the interior surface 39b. In this example all the air jets 68b are injected at the same angle which is approximately 90 degrees i.e. with no tangential component, but in other embodiments the angle β of the air jets may be different for each air jet 68b.

As previously described, each of the series of air jets 68/68b may have their own supply control mechanism 80/90 in which case the amplitude and/or frequency of each air jet can be separately controlled, or a plurality of the air jets may be feed from a manifold connected to a supply control mechanism, in which case the amplitude and/or frequency of the plurality of air jets can be controlled together. In the illustrated example the air jets 68a and 68b are operating simultaneously. In other embodiments, the air jets 68a are separately controlled to the air jets 68b and the operation of the air jets 68a and 68b alternates.

The air jets generally have a fixed position and a fixed angle. However, they may be switched on or off in unison, in groups or individually. The mass flow of an air jet may be fixed with all of the air jets having the same mass flow or different air jets having different mass flow. Alternatively, the mass flow of an air jet may be altered. Such alteration may occur in unison, in groups or individually. The air jets may be pulsed. The pulsing may be at a fixed or variable frequency. The pulsing may be applied selectively to some or all of the air jets. It is therefore possible to modulate the disturbance created by the air jets.

Although the present invention has been described with reference to various specific embodiments, it should be appreciated that various modifications and variations can be made to these embodiments without departing from the scope of the invention as claims. For example although the invention has been described with reference to a gas turbine engine it can be used in any system that exhausts gas at high speed through a nozzle. It finds particular application in propulsion systems that exhaust gas through nozzles such as gas turbine engines, turbofan, turbojet, bypass, pulse, ramjet and rocket engines. In addition, although in the described embodiment, the core nozzle and bypass nozzle exit planes are substantially co-planar the invention is applicable to different nozzle geometries, such as when the core nozzle is recessed within the bypass nozzle for internal mixing, when the core nozzle extends beyond the bypass nozzle for external mixing or when no bypass is used and gas is exhausted via a single core nozzle.

Whilst endeavouring in the foregoing specification to draw attention to those features of the invention believed to be of particular importance it should be understood that the Applicant claims protection in respect of any patentable feature or combination of features hereinbefore described and/or as shown in the drawings whether or not particular emphasis has been placed thereon.

## Claims

1. A system for exhausting gas via a nozzle, comprising:
a nozzle (19, 21) comprising a nozzle body portion (32, 33, 74) defining a nozzle exit (42, 43), **characterised in that** the nozzle body portion (32, 33, 74) comprises fluid injection means (60), positioned upstream of the exit (42, 43) relative to a fluid flow (F1, F2) created by the operation of the system, for injecting fluid upstream of the exit (42, 43).

2. A system as claimed in claim 1 wherein the nozzle body portion (32, 33, 74) further defines a nozzle flow channel (30, 31) leading to the nozzle exit (42, 43), wherein the fluid injection means (62) is positioned for injecting fluid within the nozzle flow channel (30, 31).

3. A system as claimed in claim 1 or 2 wherein the nozzle (19, 20) has an exterior surface (38a, 39a) and the fluid injection means (60) is positioned for injecting fluid at the exterior surface (38a, 39a) of the nozzle (19, 20) upstream of the exit (42, 43).

4. A system as claimed in any preceding claim wherein the fluid injection means (60) comprises one or more apertures (62) in the outer surface or surfaces (38a, 39a) of a nozzle body (32, 33, 74) for providing one or more fluid jets (68, 68a, 68b).

5. A system as claimed in claim 4 wherein the aperture(s) (62) are positioned upstream of the exit (42, 43).

6. A system as claimed in claim 4 or 5 further comprising means for providing the fluid jet(s) (62, 64, 66) via the aperture(s) (62) during operation of the system.

7. A system as claimed in claim 4, 5 or 6 further comprising pulsing means (92) for pulsing the fluid jet(s).

8. A system as claimed in claim 7 wherein the pulsing means (92) pulses the fluid jet(s) at a frequency of Hz and/or kHz.

9. A system as claimed in claim 7 or 8, wherein the pulsing means (92) are controllable to vary the frequency at which one or more fluid jets (68, 68a, 68b) are pulsed.

10. A system as claimed in any one of claims 4 to 8, further comprising means (84) for altering the mass flow of the fluid jet(s).

11. A system as claimed in any one of claims 4 to 8 wherein the mass flow rate of the fluid jet(s) (68, 68a, 68b), when operational, is fixed.

12. A system as claimed in any one of claims 4 to 11, wherein the apertures (62) have a fixed position and further comprising means for varying the position of fluid jets by providing fluid jets via selected apertures only.

13. A system as claimed in any preceding claim wherein the fluid injection means creates microjets of fluid.

14. A system as claimed in any preceding claim for use as an aeroplane engine (10), wherein the nozzle body (32, 33, 74) tapers to an edge at an exit (42, 43).

15. A system as claimed in any preceding claim, for use as an aeroplane engine (10), further comprising means for controlling the injection means to inject fluid during take-off of the aeroplane but not to inject fluid when cruising.

16. A method of suppressing part of the noise of a gas exhausted from a nozzle comprising a nozzle body portion (32, 33, 74) defining a nozzle exit (42, 43), the method comprising the step of:
injecting fluid into a fluid flow created by the operation of the engine (10) while the fluid flow is travelling adjacent the nozzle body portion (32, 33, 74).

17. A for exhausting gas via a nozzle (19, 20), comprising:
a nozzle (19, 20) comprising a nozzle body portion (32, 33, 74) defining a nozzle exit (42, 43), **characterised in that** the nozzle body portion (32, 33, 74) comprises output means, positioned upstream of the exit (42, 43) relative to a fluid flow created by the operation of the system, for disturbing a boundary layer between the nozzle body portion (32, 33, 74) and the fluid flow.

18. A system as claimed in claim 17, wherein the output means comprises fluid injection means for injecting fluid upstream of the exit (42, 43) or sound wave production means.

19. A system as claimed in claim 18, wherein the fluid injection means comprises a plurality of apertures for providing fluid microjets.

20. A system as claimed in claim 19, further comprising pulse means (92) for pulsing the fluid microjets.

21. A method of suppressing part of the noise of a gas exhausted from a nozzle comprising a nozzle body portion (32, 33, 74) defining a nozzle exit (42, 43), the method comprising the step of:
disturbing a boundary layer between the nozzle body portion (32, 33, 74) and a fluid flow created by the operation of the system.

22. A system for exhausting gas via a nozzle, comprising:
a nozzle (19, 20), the nozzle (19, 20) comprising a nozzle body portion (32, 33, 74) comprising fluid injection means for injecting fluid **characterised in that** the system further comprises control means (80) for controlling the fluid injection means to inject fluid during a first phase of operation and to not inject fluid during a second phase of operation.

23. A system as claimed in claim 22 wherein the first phase is at least a part of the take-off phase of an aeroplane flight.

24. A system as claimed in claim 22 or 23 wherein the second phase is at least a part of the cruising phase of an aeroplane plane flight.

25. Any novel subject matter or combination including novel subject matter disclosed, whether or not within the scope of or relating to the same invention as any of the preceding claims.
